Europäisches Patentamt

European Patent Office

Office européen des brevets

(19)

(11) Numéro de publication: **0 184 494**
**B1**

(12) **FASCICULE DE BREVET EUROPEEN**

(45) Date de publication du fascicule du brevet: **30.05.90**

(51) Int. Cl.⁵: **G 06 F 13/16**, G 06 F 12/02

(21) Numéro de dépôt: **85402242.3**

(22) Date de dépôt: **19.11.85**

(54) **Système pour la transmission simultanée de blocs données ou de vecteurs entre une mémoire et une ou plusieurs unités de traitement de données.**

(30) Priorité: **23.11.84 FR 8417932**

(43) Date de publication de la demande:
**11.06.86 Bulletin 86/24**

(45) Mention de la délivrance du brevet:
**30.05.90 Bulletin 90/22**

(84) Etats contractants désignés:
**AT BE CH DE GB IT LI LU NL SE**

(56) Documents cités:
**US-A-4 293 941**

**IEEE TRANSACTIONS ON COMPUTERS, vol. C-33, no. 1, janvier 1984, pages 45-78, IEEE, New York, US; V. ZAKHAROV: "Parallelism and array processing"**

**IEEE TRANSACTIONS ON COMPUTERS, vol. C-24, no. 12, décembre 1975, pages 1145-1155, IEEE, New York, US; D.H. LAWRIE: "Access and alignment of data in an array processor"**

(73) Titulaire: **THOMSON-CSF**
**51, Esplanade du Général de Gaulle**
**F-92800 Puteaux (FR)**

(72) Inventeur: **Michel, Claude**
**THOMSON-CSF SCPI 173, bld Haussmann**
**F-75379 Paris Cedex 08 (FR)**
Inventeur: **M'Rabet, Noureddine**
**THOMSON-CSF SCPI 173, bld Haussmann**
**F-75379 Paris Cedex 08 (FR)**

(74) Mandataire: **Turlèque, Clotilde et al**
**THOMSON-CSF SCPI**
**F-92045 PARIS LA DEFENSE CEDEX 67 (FR)**

Courier Press, Leamington Spa, England.

# EP 0 184 494 B1

**Description**

La présente invention concerne un système pour la transmission simultanée de blocs de données ou de vecteurs entre une mémoire et une ou plusieurs unités de traitement de données.

Elle concerne plus particulièrement les systèmes dans lesquels les unités de traitement de données fonctionnent et exécutent des programmes de façon asynchrone les unes par rapport aux autres.

Dans les systèmes connus, la communication des données entre plusieurs unités de traitement fonctionnant en parallèle pour exécuter le même programme ou des programmes différents revêt plusieurs formes qui peuvent être regroupées suivant deux modes de fonctionnement différents. Selon un premier mode appelé mode de SIMD qui est l'abréviation de la désignation anglo-saxonne "Single Instruction, Multiple Data Stream" les échanges de données se font en mode synchrone, une seule instruction cadençant tous les processeurs élémentaires. L'accroissement des performances est obtenu en faisant exécuter par un nombre élevé d'unités de traitement la même instruction de sorte qu'il est possible avec les machines réalisées suivant le mode SIMD de travailler non plus sur des scalaires mais sur des vecteurs ou tableaux de données, une seule instruction pouvant par exemple réaliser des opérations sur des suites de nombres appartenant à un tableau.

Selon un deuxième mode appelé mode MIMD qui est l'abréviation du terme anglo-saxon "Multiple Instruction, Multiple Data Stream" l'acroissement des performances est obtenu en faisant exécuter plusieurs instructions appartenant à des programmes différents par des unités de traitement différentes, ces instructions étant exécutées simultanément et opérant sur des données différentes. Les systèmes opérant en mode MIMD présentent toutefois de nombreuses difficultés de réalisations qui se situent au niveau du réglement des conflits d'accès aux données partagées entre l'ensemble des unités de traitement, au niveau de la gestion efficace des ressources, des mécanismes de synchronisation à mettre en oeuvre, et au niveau de la gestion des tâches de traitement concurrentes. Ces difficultés conduisent naturellement à une baisse sensible des performances.

Si, a priori les deux modes de réalisation SIMD et MIMD peuvent paraître complémentaires l'opposition entre ces deux techniques fait apparaître une contradiction entre la possibilité qu'offre le premier système d'augmenter le débit des données et celle offerte par le deuxième système qui permet de rendre maximal le nombre d'instructions exécutables. En effet un système MIMD permettrait de retirer le plus grand profit du parallélisme d'exécution d'un programme s'il n'existait pas de conflits entre les accès à la mémoire commune partagée par les unités de traitement. En revanche les systèmes SIMD qui apparaissent plus rigides au niveau de l'enchaînement des instructions, car seules les opérations identiques peuvent être exécutées simultanément, tirent profit de cette contrainte apparente pour paralléliser avec plus d'efficacité l'accès aux données.

Le but de l'invention est de limiter les inconvénients précités. Elle permet notamment d'eviter les conflits d'accès mémoire dans une organisation MIMD dans laquelle chaque processeur pourrait fonctionner en mode SIMD.

A cet effet, l'invention a pour objet, un système pour la transmission simultanée de blocs de données ou de vecteurs entre une mémoire et une ou plusieurs unités de traitement de données dans lequel les unités de traitement de données fonctionnant de façon asynchrone les unes par rapport aux autres, caractérisé en ce que la mémoire est composée d'un nombre entier N de bancs logiques de mémorisation comportant chacun un nombre entier n quelconque de bancs physiques de q emplacements de mémorisation chacun, le système comprenant un réseau d'interconnexion interposé entre la mémoire et les unités pour établir des connexions entre les bancs logiques de la mémoire et les unités de traitement, un dispositif logique de commande pour commander les chemins de connexion dans le réseau de connexion ainsi qu'un ou plusieurs dispositifs logiques d'adressage commandés respectivement par une unité de traitement de données pour effectuer l'adressage des emplacements de la mémoire auquelle chaque unité demande accès et exécuter le transfert par blocs des données contenues dans les emplacements correspondant, les N.n bancs physiques de la mémoire sont juxtaposés et numérotés dans l'ordre des entiers naturels 0, . . . [(N.n)-1] pour former une base matricielle ordonnée d'emplacements de mémorisation, chaque banc physique occupant une colonne de la matrice, chaque emplacement de mémorisation dans un banc physique étant à la croisée d'une ligne et d'une colonne de la base matricielle et ayant un numéro d'emplacement dans la mémoire, le numéro etant défini un numérotant ces emplacements de mémorisation en suivant les lignes sans interruption jusqu'à la fin de la dernière ligne dans l'ordre croissant des entiers naturels depuis l'emplacement de début de lignes contenu dans le premier banc physique 0 de la mémoire jusqu'à l'emplacement de fin de lignes contenu dans le dernier banc physique [(N.n)-1] de la mémoire, tous les emplacements de début de ligne de la mémoire étant situés à l'intérieur d'un premier banc physique, chaque dispositif logique d'adressage comprenant des moyens pour déterminer l'adresse du banc physique dans lequel se trouve chaque emplacement de mémorisation et pour déterminer l'adresse de l'emplacement de mémorisation dans les banc physique cette l'adresse du banc physique étant donnée par le reste de la division du numéro de l'emplacement dans la mémoire par le produit Nxn, et cette adresse de l'emplacement de mémorisation dans le banc physique étant donnée par la partie entière de cette division, le dispositif logique de commande comprenant des moyens pour établir une connexion d'une unité de traitement demanderesse sur le banc logique contenant l'adresse du début du bloc de données à transférer et des moyens de commutation pour commuter successivement l'unité

2

demanderesse sur les bancs logiques suivants à la fin de chaque transfert de de données entre un banc logique de la mémoire et l'unité de traitement de données, le transfert des données demandées s'effectuant en commutant successivement l'unité demanderesse sur les bancs physiques et après chaque commutation, en émettant à la mémoire l'adresse de l'emplacement respectif de mémorisation à l'intérieur de chaque banc physique.

La présente invention a pour avantage qu'elle permet d'établir la connexions de toutes les unités de traitement simultanément et sans conflit. Une fois la connexion d'unité de traitement établie le transfert de tout un bloc de données ou vecteur se poursuit sans interruption jusqu'au transfert de la dernière donnée du bloc ou du vecteur. Egalement l'agencement du système selon l'invention a pour avantage de rendre maximale l'utilisation de tous les bancs physiques de la mémoire ce qui permet de faire travailler le réseau d'interconnexion avec un débit constant de données.

Les caractéristiques et avantages de l'invention apparaîtront également à l'aide de la description qui va suivre faite en regard des dessins annexés qui représentent:

la figure 1 un schéma de principe de réalisation du système de transmission de données selon l'invention.

La figure 2 un tableau montrant un exemple d'organisation d'une mémoire de 25 bancs physiques répartis également à l'intérieur de 5 bancs logiques et illustrant le principe d'extraction des données de la mémoire selon l'invention.

La figure 3 un schéma illustrant le principe d'interconnexion des unités de traitement sur les bancs logiques.

La figure 4 représente un exemple de réalisation d'un processeur d'adressage selon l'invention.

La figure 5 un exemple de réalisation de la logique de commande.

La figure 6 un schéma illustrant sous forme de tableaux le principe de réarrangement de données dans une mémoire tampon du dispositif de réarrangement.

La figure 7 un schéma de réalisation d'un dispositif de réarrangement des données.

Les figures 8A et 8B des schémas de réalisation du dispositif d'adressage et de commande des mémoires tampons d'un dispositif de réarrangement.

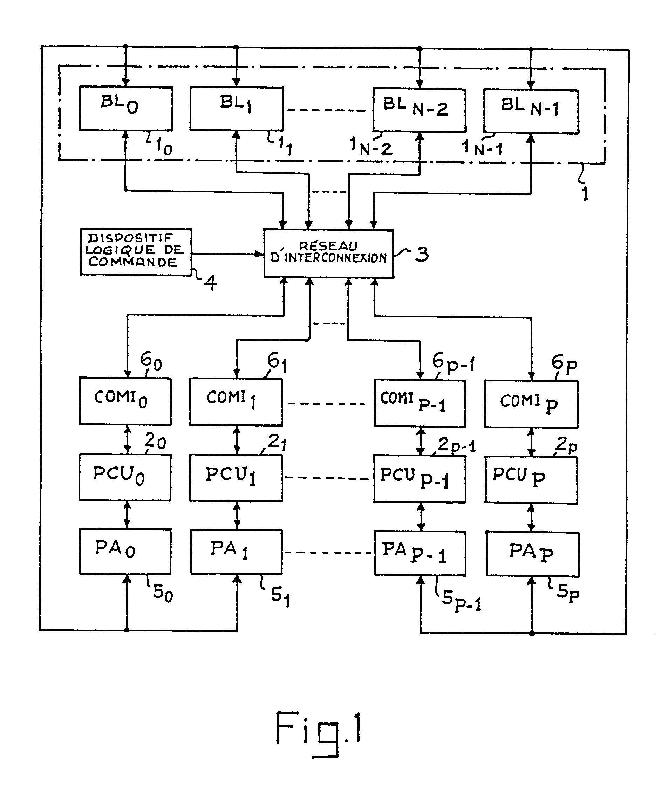

Le système de transmission de données représenté à la figure 1 comprend une mémoire 1, représentée à l'intérieur d'une ligne fermée en pointillés qui est découpée en N bancs logiques $BL_0$, $BL_1$ ... $BL_{n-2}$, $BL_{n-1}$ représentée à l'intérieur de rectangles notés respectivement de $1_0$ à $1_{N-1}$. Le système représenté comprend également un ensemble de P+1 unités de traitement de données notées respectivement PCU0, PCU1 etc. ... $PCU_{p-1}$ et $PCU_p$ représentés à l'intérieur de rectangles portant respectivement les références de $2_0$, $2_1$, ... $2_{p-1}$, $2_p$. Un réseau d'interconnexion 3 établit les connexions entre les unités de traitement $2_0$ à $2_p$ et les bancs logiques $1_0$ à $1_{N-1}$. Le réseau d'interconnexion 3 est commandé à partir d'une logique de commande 4. Des processeurs d'adresse notés respectivement $PA_0$, $PA_1$ etc. ... $PA_{p-1}$, $PA_p$ et portant les références $5_0$ à $5_p$ sont reliés aux entrées d'adressage de la mémoire 1 pour permettre le calcul de l'adresse de chaque élément à extraire dans les bancs de la mémoire 1. Des dispositifs de réarrangement des données extraites désignées respectivement par $COMI_0$, $COMI_1$ etc. ... $COMI_{p-1}$, $COMI_p$ à l'intérieur de rectangles numérotés de $6_0$ à $6_p$ sont interposés entre le réseau d'interconnexion 3 et les unités de traitement $PCU_0$, $PCU_1$ à $PCU_p$ pour réarranger les données extraites de la mémoire 1 dans l'ordre où elles étaient enregistrées dans la mémoire 1.

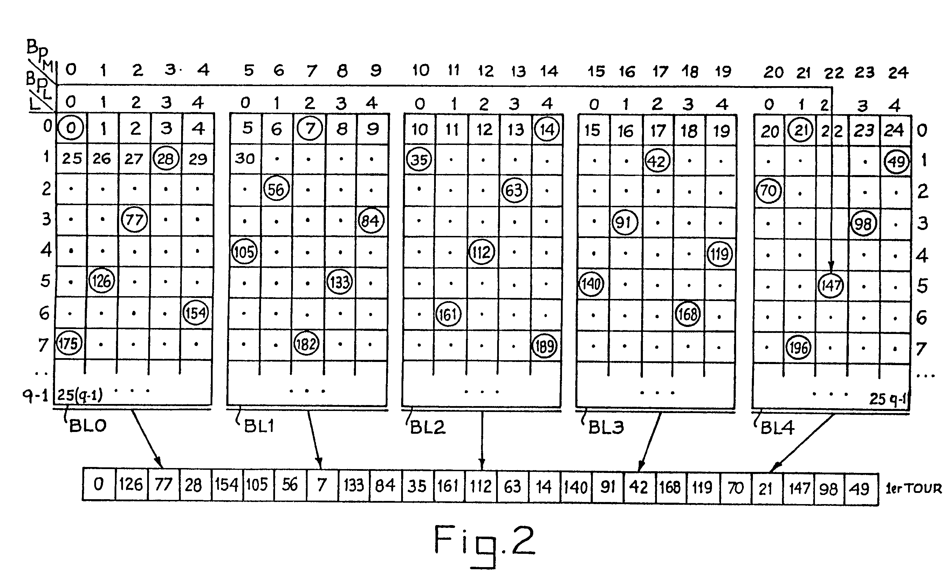

Selon l'invention le découpage de la mémoire 1 en bancs logiques permet d'obtenir le parallélisme d'accès de toutes les unités de traitement aux bancs de mémorisation de la mémoire, ce parallélisme est obtenu grâce au réseau d'interconnexion qui connecte à un instant donné chaque banc logique à une seule unité de traitement. Chaque banc logique peut toutefois contenir un nombre n de bancs physiques "pipelines" ce qui permet à chaque banc logique de ranger n mots où données consécutifs à l'intérieur de ces n bancs physiques. Un exemple de partage d'un espace mémoire en bancs physiques et bancs logiques est représenté à la figure 2.

L'espace de la mémoire 1 qui est représenté sur la figure 2 sous la forme d'une matrice de 25 × q emplacements de mémorisation placés aux intersections de 25 colonnes et de q lignes $L_0$ à $L_{q-1}$, est matérialisé par 25 bancs physiques de q emplacements de mémoire juxtaposés. Chaque ligne comporte 25 emplacements de mémoire numérotés dans l'ordre d'une progression arithmétique de raison 1, le numéro de chaque emplacement marquant le début d'une ligne étant obtenu à partir du dernier numéro de l'emplacement marquant la fin de la ligne précédente augmenté de une unité. La ligne $L_0$ contient les emplacements numérotés de 0 à 24, la ligne $L_1$ qui suit, contient les emplacements numérotés de 25 à 49 etc. ... et la dernière ligne $L_{q-1}$ contient les emplacements numérotés de 25 (q-1) à 25 q-1. Pour illustrer un mode de fonctionnement du système de transmission de données selon l'invention, on supposera à l'aide de la figure 2 qu'à un instant donné, une unité de traitement souhaite extraire de l'espace mémoire tous les "articles" ou "données" contenus dans les emplacements de la mémoire dont les numéros sont des multiples de 7 en commençant par l'article ou la donnée de n° O. Dans cette hypothèse l'unité de traitement doit d'abord se connecter sur la banc $BL_0$ là où se trouve le premier article de N° 0 puis successivement sur les bancs logiques suivants $BL_1$ à $BL_4$ pour extraire tous les articles multiples de 7 dont les numéros sont représentés entourés d'un petit cercle sur la figure 2. Durant cette première lecture des bancs logiques $BL_0$ à $BL_4$, l'unité de traitement va extraire, dans l'ordre, les premiers éléments ou articles fournis par chaque banc physique, soit la suite des articles ou données correspondant aux emplacements numérotés 0, 126, 77, 28, 154 . . . 98 et 49. A la fin de cette première lecture l'unité de traitement quitte le banc logique BL$_4$ pour retourner par permutation circulaire à une nouvelle lecture du banc logique BL$_0$ puis successivement sur les bancs logiques BL$_1$, BL$_2$, BL$_3$ et BL$_4$ pour extraire durant ce deuxième tour, les articles ou données situés aux emplacements numérotés 175, 301, 252, 203, 329 . . . 273 et 224. Plusieurs lectures des bancs logiques peuvent ainsi être exécutées selon le principe précédemment décrit, par une seule unité de traitement tant que l'ensemble des données ou des articles composant le vecteur ou le bloc de données n'a pas été entièrement transféré. Dans l'exemple qui vient d'être décrit le vecteur extrait de la mémoire est composé par une suite de vecteurs ou scalaires dont la suite des adresses en mémoire suit une progression arithmétique vérifiant la relation

$$A_k = A_0 + kR \qquad (1)$$

dans laquelle A$_k$, A$_0$, k et R désignent respectivement l'adresse du k$^{eme}$ article ou de la k$^e$ donnée à l'intérieur du vecteur, A$_0$ l'adresse de début du premier article ou de la première donnée du vecteur, k le rang ou le numéro d'ordre de l'article ou de la donnée dans le vecteur et R la raison. En utilisant ce même principe d'adressage, d'autres vecteurs pourront ainsi être extraits de la mémoire par d'autres unités de traitement travaillant en simultanéité sur des bancs logiques différents. Ces vecteurs seront définis par des adresses de début différentes et des raisons différentes.

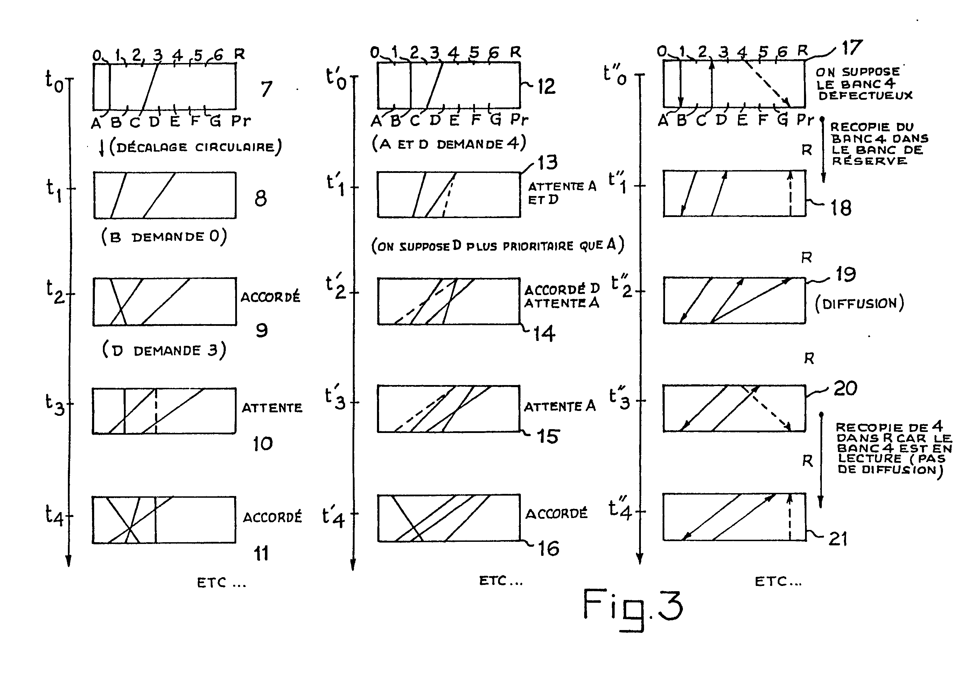

Des exemples d'interconnexion de plusieurs unités de traitement sur plusieurs bancs logiques sont représentés schématiquement à la figure 3 qui montre des exemples de chemin de connexion établis par un réseau de connexion capable de connecter plusieurs unités de traitement référencées respectivement par les lettres A, B, C, D, E, F, G indifféremment sur 7 bancs logiques d'une mémoire notée respectivement 0, 1, 2, 3, 4, 5 et 6. Dans la configuration 7 les unités de traitement A et C sont connectées au temps t$_0$ respectivement sur les bancs logiques 0 et 3. Au temps t$_1$ suivant, correspondant à la configuration 8, l'unité de traitement B demande l'accès au banc logique 0 pendant que l'unité de traitement A est connectée au banc logique 1 et l'unité de traitement C est connectée au banc logique suivant 4. Au temps t$_2$ suivant, correspondant à la configuration 9, l'accès de l'unité de traitement B au banc logique 0 est accordé, les unités de traitement A et C sont respectivement connectées aux bancs logiques 2 et 4 suivant, et l'unité de traitement D fait une demande d'accès au banc logique 3. Au temps t$_3$ correspondant à la configuration 10, les unités de traitement A, B et C sont respectivement connectés sur les bancs logiques 3, 1 et 6 mais l'exécution de la connexion de l'unité D au banc logique 3 est différée car le banc logique 3 se trouve être occupé à l'extraction des données contenues dans son banc par l'unité de traitement A. Au temps t$_4$, correspondant à la configuration 11 suivante, la connexion de l'unité de traitement D sur le banc 3 est accordée du fait de la libération du banc logique 3 par l'unité A qui se trouve connectée à cet instant sur le banc logique 4 suivant. Ainsi de suite, à chaque nouvel instant de commutation, l'ensemble des unités de traitement déjà connectées sur un banc logique sont connectées respectivement sur le banc logique suivant à la manière "d'un tourniquet" à partir d'un premier banc logique désigné par elle, et l'accès n'est accordée que si le banc logique qu'elle demande est libre. Une fois le transfert des données effectué, l'unité de traitement concerné par ce transfert se déconnecte. Pour éviter les conflits d'accès qui peuvent se produire, la logique de commande 4 gère toutes les demandes d'accès émanant de chaque unité de traitement en veillant à ce que les règles d'accès d'une unité de traitement dans "le tourniquet" soient respectées. En particulier, dans le système selon l'invention, une première règle d'accès consiste à considérer qu'une unité de traitement déjà engagée dans le "tourniquet" est nécessairement prioritaire sur le banc logique qu'elle occupe par rapport à d'autres unités voulant entrer dans le tourniquet par le même banc logique.

Une deuxième règle d'accès consiste lorsque au moins deux unités de traitement veulent avoir accès à un même banc logique à accorder cet accès en premier à l'unité la plus prioritaire, en définissant naturellement la forme que devra revêtir cette priorité pour chaque configuration particulière du système.

Et enfin, une troisième règle d'accès consiste à satisfaire les demandes d'accès qui ne sont pas conflictuelles simultanément.

L'utilisation de ces règles à d'autres configurations d'accès est illustrée à la figure 3 à l'aide des exemples de configurations 12 à 21 des réseaux d'interconnexion, et leur représentation est supposée suffisamment explicite pour qu'il ne soit pas nécessaire de les décrire avec plus de détails.

Comme la mémoire est organisée en bancs physiques juxtaposées qui confèrent à celle-ci une structure matricielle où chaque emplacement de mémoire ne peut être repéré ou adressé qu'au croisement d'une ligne et d'une colonne de la matrice et comme dans le système d'adressage par bloc utilisé par l'invention, les emplacements de mémoire contenant les données ou articles de chaque vecteur ou bloc de données ne sont connus que par des adresses vérifiant une progression arithmétique d'adresse d'emplacements de mémoire situés le long de chaque ligne de la mémoire, chaque processeur d'adresse 5$_0$ à 5$_p$ du système de transmission selon l'invention à la charge de convertir les adresses en progression arithmétique des vecteurs connus par chaque unité de traitement, en une adresse désignant pour chaque donnée ou article à extraire le banc physique qui la contient et son emplacement dans le banc physique.

En se référant de nouveau à la structure de l'espace mémoire représenté à la figure 2, il apparait que l'opération de transformation qui permet de connaître dans quel banc se trouve un article ou une donnée connu par son numéro d'emplacement dans la mémoire est une opération qui est le modulo arithmétique

4

# EP 0 184 494 B1

du nombre de bancs physiques contenus de la mémoire. Ainsi sur la figure 2, pour l'élément 147, l'opération 147 mod 25 a pour résultat 22 (22 étant le reste de la division du nombre 147 par le nombre 25) et le nombre 22 correspond au numéro du banc physique dans lequel se trouve l'élément 147. Pour obtenir l'adresse de cet élément dans le banc il suffit d'effectuer la division entière du nombre 147 par 25 ce qui donne le quotient 5, et qui correspond, par exemple, au nombre de balayages des bancs logiques $BL_0$ à $BL_4$ qu'il a fallu effectuer pour ranger l'élément 147 dans la mémoire et aussi sur la figure 2 à la ligne 5 de la mémoire.

Le rôle par conséquent important de chaque processeur d'adresse est d'effectuer à chaque nouvelle extraction de données ou d'articles en mémoire la division rapide du numéro du premier article ou de la première donnée par le modulo du nombre de bancs physiques. Une seule division apparaît nécessaire à l'initialisation de l'extraction car dans la suite de simples additions suffisent pour l'extraction des données ou articles suivant. En effet, en désignant par x et y les numéros de deux éléments ou articles à extraire d'un même vecteur ou bloc, et en supposant qu'ils sont rangés dans le même banc physique d'une mémoire à 25 bancs physiques, ces numéros vérifient les relations

$$x \bmod 25 = y \bmod 25 \quad (2)$$
soit $x-y = a.25 \quad (3)$

a étant un entier naturel positif.

Comme ces éléments ou attributs appartiennent aussi à la même famille d'éléments à extraire ils vérifient aussi la relation

$$x-y = b.7 \quad (4)$$

où b est aussi un entier naturel positif.

Par conséquent

$$25 a = 7b \quad (5)$$

comme 25 et 7 sont premiers entre eux ilst vérifient les relations

$$a = 7c \quad (6)$$
et $b = 25c \quad (7)$

c étant aussi un entier naturel positif.

Par conséquent, si un $j^{eme}$ élément à extraire est dans un banc i à l'adresse aj on peut dire que le $(j+b)^{eme}$ élément est aussi dans le banc i à l'adresse aj+a. Ainsi par exemple, le $2^{eme}$ élément à extraire de numéro 7 sur la figure 2 est à l'adresse 0 et le $2+25 \times 1 = 27^{eme}$ éléments (numéro 189) est aussi dans le banc 7 à l'adress $0+7 \times 1 = 7$ en considérant ici que $c = 1$ $aj = 0$ $a = 7$ et $b = 25$.

Le principe d'adressage qui vient d'être décrit dans le cas d'une mémoire à deux dimensions du type de celle représentée à la figure 2 peut naturellement être étendu à une mémoire à trois dimensions. Dans l'un ou l'autre de ces cas les migrations d'adresse d'article à extraire sont toujours déterminés par la relation $A_K = A_1 + K.R$, $A_K$ étant l'adresse du $k^{eme}$ élément transféré $A_1$ étant l'adresse initiale de transfert et R la raison de la suite $A_K$.

Dans le cas par exemple, d'une extraction de ligne à partir d'une adresse de départ $A_1$ dans un tableau à deux dimensions la migration d'adresse est réalisée par le transfert des éléments d'adresses

$$A_K = A_1 + k.I$$

l'étant la taille d'une colonne du tableau.

Dans le cas d'un tableau à trois dimensions de taille $I \times J \times K$ la migration d'une ligne se traduira par une suite d'adresse $A_K = A_1 + k.(J.K)$ et dans ce cas la raison sera égale à $R = J.K$.

Pour extraire un plan A d'un tableau à 3 dimensions représenté par rapport à des directions orthonormées i, j, k, et définies par A(1:I, 1:J, 1:K) si le plan A est parallèle à deux directions i, j orthonormées et a pour coordonnées A(id:if, id:jf, k) l'opération revient à extraire les suites des éléments contigus de can plan de raison $R = 1$ séparéees par des sauts de taille I-(if-id).

Par contre, si le plan A est parallèle aux directions (i, k) et a pour coordonnées (A(id:if, j, kd:kf) l'opération d'extraction revient à extraire les suites d'éléments de raison $R = 1$, séparées par des sauts d'amplitude I-(if-id)=J.I.

Pour réaliser ces migrations il faut donc dans ces cas, déterminer les suites d'adresse avec raison, la raison étant identique pour toutes les suites d'une migration, les amplitudes des sauts et les adresses $A_1$ de départ dans chaque série. Le procédé consiste alors à découper chaque migration complète en sous-ensembles traités de manière identique. Pour chaque sous-ensemble traité un calcul est effectué pour connaître le numéro du banc physique sur lequel commence la migration, l'adresse de début de transfert pour chaque banc physique, et le pas d'adressage entre deux accès consécutifs sur le même banc. A partir du numéro de banc physique de début de transfert et du pas d'adressage un calcul permet également de déterminer l'adresse du début sur chaque banc, soit Adx, ce calcul se faisant en local sur chaque banc par un processeur d'adresse. Chaque processeur d'adresse relié à chaque banc logique satisfait la requête de migration de manière autonome avec des synchronisations en début de chaque sous-ensemble, s'il y en a.

Du côté des unités de traitement les données extraites doivent être ensuite échangées dans l'ordre logique

5

d'organisation des tableaux extraits de la mémoire. Quel que soit le cas d'extraction une migration commence toujours par l'exécution, par l'unité de traitement effectuant cette migration, d'une phase préliminaire de découpage de la requête en sous-ensemble $Se_i$ d'éléments d'adresse définis par une relation de la forme $SE_i = \{A_K, KEE [1, K_{max}]; A_K = A_1 + KR\}$. Dans cette phase l'unité de traitement détermine la raison R, le nombre $K_{max}$ et l'amplitude a des sauts entre deux sous-ensembles consécutifs $SE_i$ et $SE_{i+1}$.

L'amplitude des sauts a étant définie par la relation

$$a = (A_1)_{SE_{i+1}} - (A_{Kmax})_{SE_i}$$

Ensuite, pour chaque sous-ensemble $SE_i$ la migration est décomposée en trois phases distinctes, une phase d'initialisation (I), un phase de transfert (T) et une phase d'ordonnancement (0). Selon le sens du transfert ces phases n'ont pas lieu dans le même ordre. Pour une migration de la mémoire 1 vers une unité de traitement elles ont lieu dans l'ordre (I)-(T)-(0) et pour une migration dans le sens unité de traitement vers la mémoire 1 elles ont lieu dans le sens (I)-(0)-(T).

L'initialisation correspond au calcul de l'adresse de début de transfert et de la raison pour chaque banc physique. L'ordonnancement correspond à la transformation ordre logique des indices ordre physique dans une tranche de mémoire.

La phase d'initialisation consiste à calculer sur chaque banc physique l'adresse de début Adx de la migration ou du transfert. En désignant par Adb l'adresse de début de la migration définie par un mot d'adresse de banc physique Bdb et par abd l'adresse d'un mot dans le banc et par R la raison d'adressage des bancs concernés par la migration avec $R = p.b + s$, s désignant le déplacement en banc physique et p le déplacement dans un banc, un premier calcul est effectué pour connaître le premier commun multiple de la raison R et du nombre de bancs D. Si P désigne le plus petit commun multiple PPCM) obtenu, le nombre P se trouve lié par la raison R et au nombre b par les relations

$$P = J.R = K.b$$

J donne le nombre de bancs concernés par la migration et k donne le pas d'adressage sur un banc. Suivant que la raison R est un multiple du nombre de bancs logiques BL, du nombre de bancs physiques par banc logique BP ou du nombre total de bancs physiques B, J pourra prendre l'une des trois valeurs

$$J = \frac{b}{b1},$$

$$j = \frac{b}{bp}$$

ou J = 1. Dans tous ces cas le débit de la migration diminuera d'un facteur

$$\frac{J}{b}.$$

Si par contre R et b sont des nombres premiers alors J = b et le débit est nominal et s'effectue par tranche de b éléments, K étant dans ce cas égal à R. Dans ces conditions un banc X est concerné si la relation suivante

$$[(Bdb - X).J] \bmod b = 0$$

L'adresse de début du transfert Adx dans le banc physique X concerné est ensuite calculé en exécutant l'addition

$$Adx = Adb + k.p + (K.s)/b$$

avec $k = [(X - Bdb).s^{-1}] \bmod b$.

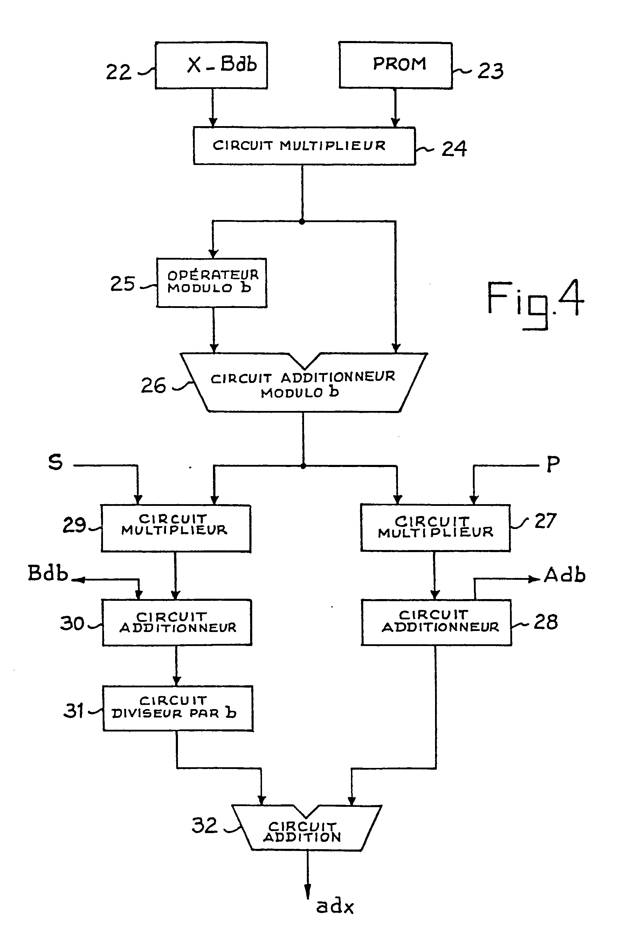

Un exemple de réalisation d'un processeur d'adresse permettant le calcul de l'adresse du début d'un transfert ou d'une migration est décrit ci-après à l'aide du schéma représenté à la figure 4. Le processeur d'adresse représenté à la figure 4 comprend deux mémoires mortes programmables 22, 23, un circuit multiplieur 24, un opérateur modulo b 25, un circuit-additionneur modulo b 26, deux circuits multiplieurs 27, 29, trois circuits additionneurs 28, 30, 32 et un circuit diviseur 31. L'ensemble constitué par les deux

EP 0 184 494 B1

mémoires mortes programmables 22 et 23 et les circuits 24 à 26 exécutent le calcul des numéros d'ordre logique k de l'élement d'adresse Adx sur le banc physique X. La mémoire morte 22 est adressée par le mot d'adresse Bdb et contient une table des différences X—Bdb. La mémoire morte 23 contient une table des inverses des déplacements s en bancs physiques et est adressée par le mot de déplacement s. Le circuit multiplier 24 exécute l'opération $(X—Bdb).s^{-1}$ et l'opérateur modulo b 25, couplé entre la sortie du circuit multiplier 24 et une entrée d'opérande du circuit additionneur 26, réalise l'opération modulo b pour obtenir le numéro d'ordre logique k de l'élément sur le banc physique X. Les circuits 27, 28, 29, 30, 31 et 32 réalisent la fonction

$$[(Bdb + ks)/b] + kp + Adb$$ pour engendrer à la sortie du circuit 32 l'adresse Adx recherchée.

Pour mettre en oeuvre le processus d'adressage exécuté par chacun des processeurs d'adresse, la logique de commande 4 place au préalable les commutateurs du réseau d'interconnexion sur les chemins demandés par les unités de traitement. Le rôle de la logique de commande 4 est d'assurer à chaque unité demanderesse l'accès à la mémoire 1 d'une part, sur le banc logique de départ auquel elle veut accéder et d'autre part, sur les bancs logiques suivants selon le principe du "tourniquet" exposé précédemment pour effectuer la migration d'adresse qu'elle souhaite réaliser.

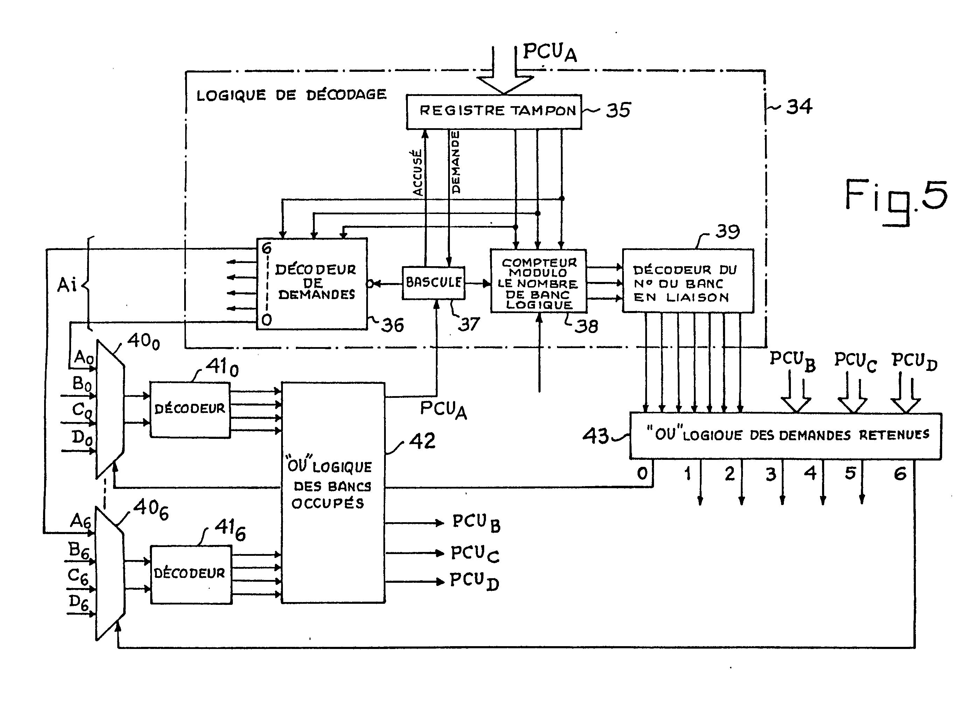

La logique de commande qui est représentée à la figure 5 permet de gérer toutes les demandes des unités de traitement de manière à éviter les conflits d'accès et son fonctionnement obéit aux trois régles d'accès précédemment énoncées. La logique de commande représentée à la figure 5 comprend une logique de décodage 34 représentée à l'intérieur d'une ligne fermée en pointillés comprenant un registre tampon 35 couplé par ses sorties à un décodeur de demandes 36, à une bascule d'accusé de réception 37 et à un compteur modulo le nombre de bancs logiques 38, la logique de décodage 34 comprend également un décodeur du numéro du banc logique en liaison 39. Le décodeur de demande 36 est relié par ses sorties numérotées de 0 à 6 aux entrées respectives de 6 codeurs de priorité portant respectivement les références $40_0$ à $40_6$. Les codeurs de priorité $40_0$ à $40_6$ sont connectés respectivement par leurs sorties aux entrées d'un décodeur de priorité noté respectivement $41_0$ et $41_6$ chacune des sorties des décodeurs de priorité $41_0$ étant connectée aux entrées d'un circuit OU logique des bancs occupés 42. Egalement le décodeur du numéro de banc en liaison 39 est connecté par ses sorties à des entrées respectives d'un circuit OU logique de demandes retenues 43. Bien que l'exemple de réalisation de la figure 5 new fasse apparaître qu'une seule logique de décodage 34 couplée par le registre tampon 31 à une unité de traitement notée $PCU_A$, on comprendra naturellement que d'autres logiques de décodage du type de celle qui vient d'être décrite seront nécessaire pour connecter à la logique de commande 4 à chacune des autres unités, $PCU_B$ à $PCU_D$ par exemple, du système de transmission selon l'invention. Le fonctionnement de la logique de commande représenté à la figure 5 est le suivant. L'unité de traitement $PCU_A$ qui est couplée à la logque de décodage 34 dépose chaque demande d'accès à un banc logique de départ de la mémoire 1 dans le registre tampon 35. Cette demande contient le numéro du banc logique de départ qui dans la configuration de la figure 5 est codé de façon à permettre l'adressage de 7 bancs logiques, cette demande contient également un bit indiquant le sens du transfert des données ou des articles entre la mémoire 1 et l'unité de traitement $PCU_A$ et un bit de commande de connexion. Le numéro du banc logique demandé est décodé par le décodeur de demande 36 et la demande $A_i$ parvient par un fil noté 0 à 6 à l'entrée d'un des codeurs de priorité $40_0$ à $40_6$ qui reçoivent, sur leurs autres entrées, les autres demandes d'accès

$$[B_{ij}]^6, [C_i]^6, [D_i]^6$$
$$i=0 \quad i=0 \quad i=0$$

fournies par les autres logiques de décodage couplées à d'autres unités de traitement $PCU_B$ à $PCU_D$ par exemple. Chaque codeur de priorité $40_0$ à $40_6$ choisit la demande la plus prioritaire et la fournit à l'entrée des décodeurs $41_0$ à $41_6$ correspondant où elle est décodée, ce qui permet d'indiquer à l'entrée du circuit OU logique des bancs occupés 42 la demande de l'unité de traitement qui a été acceptée. Le circuit OU 42 exécute le traitement en parallèle de toutes les demandes d'accès. Si dans le cas de la figure 5 la demande de connexion de l'unité de traitement $PCU_A$ est acceptée, le circuit OU logique des bancs occupés 42 remet à zéro la bascule de demandes d'accès 37 et celle-ci fournit sur une de ses sorties en direction de l'unité de traitement $PCU_A$, un accusé de connexion qui inhibe la demande de l'unité de traitement $PCU_A$ au niveau des décodeurs de demandes 36 qui devient désormais inutile. Le compteur modulo le nombre de bancs logique 38 est chargé avec le numéro du banc logique de départ. Le compteur modulo 38 représente le tourniquet précédémment décrit il s'incrémente à chaque changement de bancs logiques dans le sens de la permutation circulaire effectuée sur l'ensemble des bancs logiques et modélise par conséquent l'accès par décalage circulaire à tous les bancs. Le contenu de tous les compteurs modulo le nombre de bancs logique 38 contenus dans les autres logiques de décodage 34 est décodé par les décodeurs de numéro de bancs en liaison (ou occupés) 39 des autres logiques de décodage et est appliqué sur les entrées du circuit OU logique 43 qui fournit en sortie la liste des bancs occupés ou en liaison.

En revenant à l'exemple d'extraction de la figure 2 on peut constater que les éléments ou les articles extraits de la mémoire sont fournis dans le désordre et qu'au premier tout par exemple, l'extraction du premier élément de chaque banc physique, a fourni la suite d'articles 0,126,77,28,154,..., 98 et 49. Pour être

7

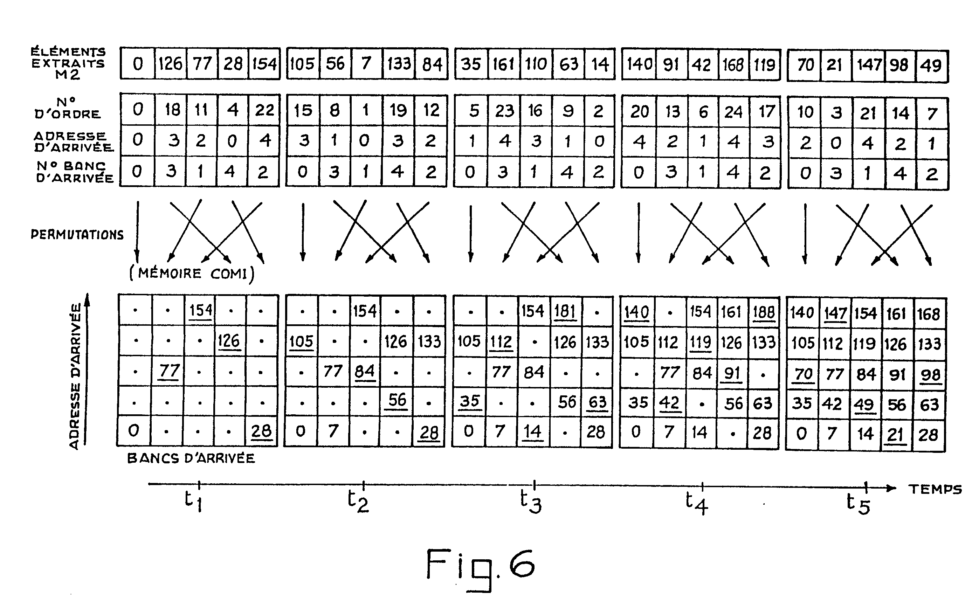

exploitable les suites d'articles extraits doivent être remises dans l'ordre, cette mise en ordre étant effectuée à la manière représentée à la figure 6 par les dispositifs de réarrangement $6_0$ à $6_p$ de la figure 1. Pour effectuer ces réarrangements les dispositifs de réarrangement couplés à chaque unité de traitement possède une mémoire qui pour les besoins d'explications du mécanisme de réarrangement décrits ci-après est structurée dans le cas de la figure 6 pour recevoir 25 mots de données répartis sur 5 bancs de mémorisation. Dans l'exemple représenté à la figure 6 la liste des numéros extraits de la mémoire 1 figure sur la première ligne du tableau, cette liste correspondant à la liste des articles extraits de l'exemple d'extraction représenté à la figure 2. La deuxième ligne de la figure 6 renferme les numéros d'ordre des articles extraits de la mémoire 1. Et les deuxième et troisième lignes figurent les listes des adresses d'arrivée et des bancs d'arrivée des articles dans la mémoire du dispositif d'arrangement. Dans le cas de la figure 6 l'adresse d'arrivée d'un article dans la mémoire du dispositif de réarrangement est obtenue par une opération modulo 5 effectuée sur le numéro d'ordre de l'article et les numéros du banc d'arrivée est égal au numéro d'ordre divisé par 5. Dans l'exemple représente l'élément n° 154 a comme numéro d'ordre 22 et son banc d'arrivée est obtenu en divisant 22 par 5 ce qui donne le nombre 4 et son adresse d'arrivée est obtenue en effectuant l'opération modulo 5 sur le numéro d'ordre 22 qui consiste à rechercher le reste de la division du numéro d'ordre 22 par le nombre 5 ce qui donne le nombre 2. Selon le mécanisme représenté à la figure 6 la mémoire des dispositifs de réarrangement est remplie au bout de 5 instants successifs de transfert des articles d'arrivée, la mémoire reçoit les 5 premiers articles 0,126, 77, 28 et 154 à l'instant $t = t_1$ et les range dans le façon précédemment décrite aux adresses indiquées dans les bancs d'arrivée et il fait de même pour les 5 articles suivant à l'instant $t = t_2$ puis pour les suivants aux instants $t_3$, $t_4$ et $t_5$ où la totalité des 25 articles est recueillie. Après l'instant $t_5$ l'unité de traitement pourra lire dans la mémoire de son dispositif d'arrangement les articles enregistrés en opérant une migration d'adresse de raison 1. En effectuant cette lecture sur les articles mémorisés à l'instant $t_5$ indiqué à la figure 6 elle pourra constater que les articles lus ont bien été replacés dans l'ordre de la disposition qu'il avait dans la mémoire 1.

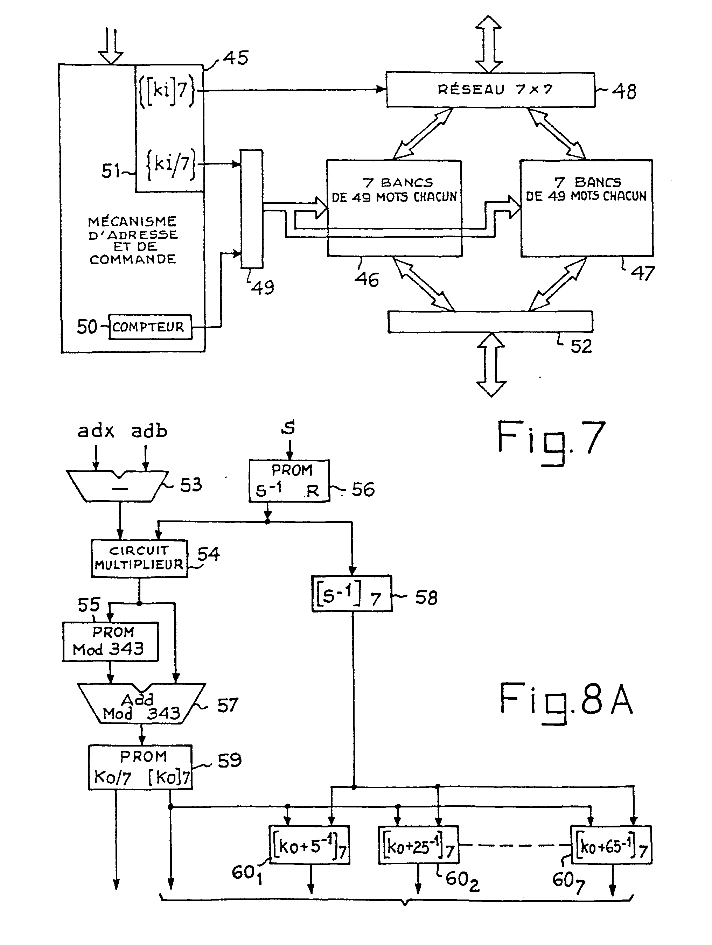

Un exemple de réalisation du dispositif de réarrangement est représenté à la figure 7, le dispositif représenté comprend un mécanisme d'adresse et de commande 45 couplé à deux mémoires 46 et 47 par l'intermédiaire d'un réseau de commutation 48 et d'un registre d'adresse 49. Le mécanisme d'adresse et de commande 45 comprend un compteur d'adresse 50 et un dispositif de calcul d'adresse 51, un aiguilleur 52 assure l'aiguillage des données entre l'unité de traitement couplée aux dispositifs de réarrangement et les mémoires 46 et 47 de ce dispositif. Dans l'exemple de réalisation représenté à la figure 7 les mémoires 46 et 47 sont organisées selon 7 bancs de mémorisation de 49 mots ce qui permet d'assurer les rarrangements dans une matrice de 7 fois 49 mots.

L'adressage des mémoires 46 et 47 est effectué d'une manière similaire à l'adressage de la mémoire 1. Comme précédemment l'adresse d'un élément sur un banc est déterminée à partir d'une raison S et de l'adresse de début Adb des éléments à extraire sur b bancs. L'adresse du banc d'un élément à extraire est définie par la relation à l'aide de la relation

$$Adx = (Adb + KS) \text{ modulo } b$$

K représente l'ordre logique de l'élément à extraire et K est défini pour chaque banc par la relation

$$K = [(Adx - A\ db).S^{-1}] \text{ modulo } b$$

Lorsque deux bancs sont contigus d'adresses Adx et Adx+1 les valeurs de K sont les suivantes

$$Adx \rightarrow K = [(adx-A\ db).S^{-1}] \text{ modulo } b$$
$$et\ Adx+1 \rightarrow K+1 = [(Adx + 1 - Adb).S^{-1}].\text{modulo } b$$
$$et\ K + 1 = [K+S^{-1}].\text{modulo } b$$

Dans le cas de la figure 7, b est un multiple de 7 correspondant à l'organisation des mémoires 46 et 47 composés de 7 bancs de 49 cellules chacun, et les valeurs $[Ki]_7$ désignant les numéros des bancs sont définies par les relations de récurrence

$$K, [(K+S^{-1})]_7, [(K+2.S^{-1})]_7 \ldots [(K+7S^{-1})]_7$$

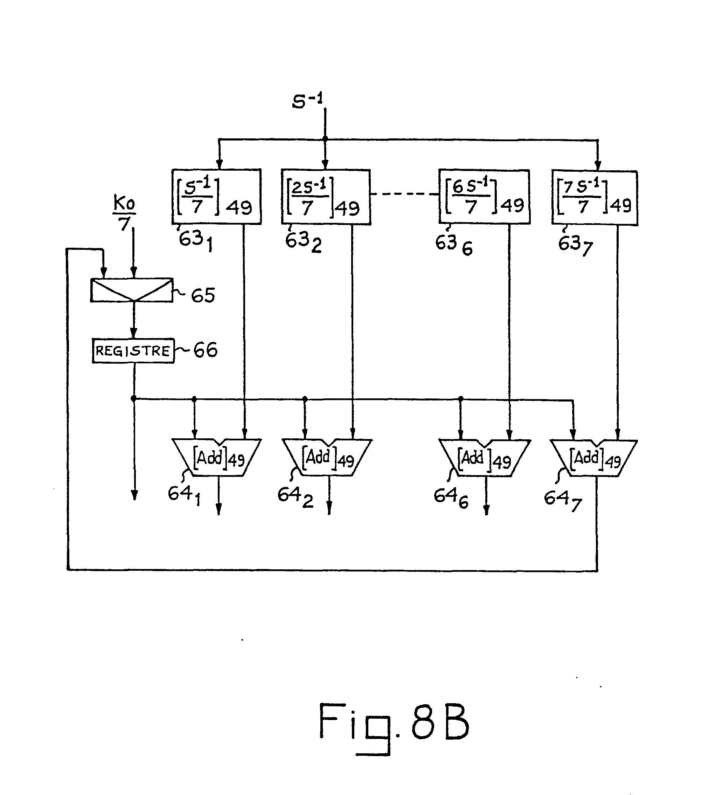

Pour déterminer l'adresse Ki/7 de chaque article dans un banc il suffit de diviser le numéro du banc par le modulo b du nombre de bancs, soit 7 dans le cas de la figure 7. Un exemple de réalisation du mécanisme d'addressage et de commande 51 est représenté aux figures 8A et 8B, la partie du mécanisme d'adressage représentée à la figure 8A comprend un circuit additionneur 53, un circuit multiplieur 54, une mémoire morte programmable 55, un circuit additionneur 57 et une mémoire morte programmable 59 couplés dans cet ordre en série. Il comprend également deux mémoires mortes programmables 56 et 58 couplées dans cet ordre en série ainsi que des mémoires mortes programmables $60_1$, $60_2$ et $60_7$. Les adresses Adx et Adb sont appliquées respectivement aux première et deuxième entrées d'opérande du circuit soustracteur 53 qui applique le résultat de la soustraction effectuée sur les adresses Adx et Adb à une première entrée

8

d'opérande du circuit multiplieur 54. La raison s est appliquée sur les entrées d'adressage de la mémoire morte programmable 56 qui fournit à l'aide d'une table l'inverse $S^{-1}$ de la raison appliquée sur ces entrées d'adressage pour l'appliquer sur la deuxième entrée d'opérande du circuit multiplier 54. Le résultat de la multiplication effectuée par le circuit multiplieur 54 est appliqué sur les entrées d'adressage de la mémoire morte programmable 55 et sur une première entrée d'opérande du circuit additionneur 57. La sortie de la mémoire morte programmable 55 est appliquée sur une deuxième entrée d'opérande de l'additionneurs 57 qui fournit sur sa sortie le nombre K recherché. Le résultat obtenu à la sortie du circuit additionneur 57 est appliqué sur les entrées d'adressage de la mémoire morte programmable 59 qui effectue la division à l'aide d'une table du nombre K par le modulo du nombre de bancs b des mémoires 46 et 47. La mémoire morte programmable 59 fournit la valeur de K correspondant au banc 0 et cette valeur de K est appliquée sur des premières entrées d'adressage des mémoires mortes programmables de $60_1$ à $60_7$ qui sont adressées sur leur deuxième entrée d'adressage par la sortie de la mémoire morte programmable 58 qui contient une table de tous les inverses modulo 7 du reste s. Les mémoires $60_1$ à $60_7$ contiennent des tables permettant d'effectuer les additions $[K+S^{-1}]_7$. $[K+2S^{-1}]_7$ ... $[K+7S^{-1}]_7$ définies précédemment pour définir les numéros des bancs logiques de stockage les éléments ou articles dans les bancs de mémorisation.

Les adresses des articles à stocker dans chaque banc de mémorisation sont déterminées à partir du dispositif de calcul d'adresse représenté à la figure 8B qui comprend un ensemble de mémoires mortes programmables $63_1$, $63_2$ ... $63_6$ et $63_7$, un ensemble de circuits additionneurs modulo 49 référencés de $64_1$ à $64_7$, un circuit aiguilleur 65 et un registre 66. Les adresses correspondant aux 7 bancs d'une mémoire de mémorisation sont obtenues en sortie des circuits additionneurs $64_1$ à $64_7$. Les premières entrées d'opérande des additionneurs $64_1$ à $64_7$ sont reliées aux sorties des mémoires mortes programmables $63_1$ à $63_7$ qui contiennent des tables des divisions par 7 de l'inverse des nombres $S^{-1}$, $2S^{-1}$ ..., $6S^{-1}$ et $7S^{-1}$ modulo 49. Le quotient par 7 du nombre K0 correspondant au banc 0 est appliqué sur les deuxièmes entrées d'opérande des additionneurs $64_1$ à $64_7$ au travers du circuit aiguilleur 65 et du registre 66. La sortie du circuit additionneur $64_7$ est reliée sur une deuxième entrée du circuit aiguilleur 65 pour assurer la migration des adresses à l'intérieur des mémoires 46 et 47.

## Revendications

1. Système pour la transmission simultanée de vecteurs ou blocs de données entre une mémoire (1) et une ou plusieurs unités de traitement de données ($2_0$ ... $2_p$) dans lequel les unités de traitement de données fonctionnent de façon asynchrone les unes par rapport aux autres, caractérisé en ce que la mémoire est composée d'un nombre entier N de bancs logiques de mémorisation comportant chacun un nombre entier n quelconque de bancs physiques de q emplacements de mémorisation chacun, le système comprenant un réseau d'interconnexion (3) interposé entre la mémoire (1) et les unités ($2_0$ ... $2_p$) pour établir des connexions entre les bancs logiques de la mémoire et les unités de traitement, un dispositif logique de commande (4) pour commander les chemins de connexion dans le réseau de connexion (3) ainsi qu'un ou plusieurs dispositifs logiques d'adressage ($5_0$ ... $5_p$) commandés respectivement par une unité de traitement de données ($2_0$ ... $2_p$) pour effectuer l'adressage des emplacements de la mémoire (1) auquelle chaque unité ($2_0$ ... $2_p$) demande accès et exécuter le transfert des vecteurs ou des blocs de données contenues dans les emplacements correspondant, les N.n bancs physiques de la mémoire étant juxtaposés et numérotés dans l'ordre des entiers naturels 0, ... [(N.n)-1] pour former une base matricielle ordonnée d'emplacements de mémorisation, chaque banc physique occupant une colonne de la matrice, chaque emplacement de mémorisation dans un banc physique étant à la croisée d'une ligne et d'une colonne de la base matricielle et ayant un numéro d'emplacement dans la mémoire, le numéro étant défini un numérotant ces emplacements de mémorisation en suivant les lignes sans interruption jusqu'à la fin de la dernière ligne dans l'ordre croissant des entiers naturels depuis l'emplacement de début de lignes contenu dans le premier banc physique 0 de la mémoire jusqu'à l'emplacement de fin de lignes contenu dans le dernier banc physique [(N.n)-1] de la mémoire, tous les emplacements de début de ligne de la mémoire étant situés à l'intérieur d'un premier banc physique, chaque dispositif logique d'adressage ($5_0$ ... $5_p$) comprenant des moyens (22, ... 32) pour déterminer l'adresse du banc physique dans lequel se trouve chaque emplacement de mémorisation et pour déterminer l'adresse de l'emplacement de mémorisation dans les banc physique cette adresse du banc physique étant donnée par le reste de la division du numéro de l'emplacement dans la mémoire par le produit Nxn, et cette adresse de l'emplacement de mémorisation dans le banc physique étant donnée par la partie entière de cette division, le dispositif logique de commande (4) comprenant des moyens (34) pour établir une connexion d'une unité de traitement demanderesse sur le banc logique contenant l'adresse du début du vecteur ou du bloc de données à transférer et des moyens de commande (43) pour commuter successivement l'unité demanderesse sur les bancs logiques suivants à la fin de chaque transfert de données entre un banc logique de la mémoire (1) et l'unité de traitement de données ($2_0$ ... $2_p$), le transfert des données demandées s'effectuant en commutant successivement l'unité demanderesse sur les bancs physiques et après chaque commutation, en émettant à la mémoire l'adresse de l'emplacement respectif de mémorisation à l'intérieur de chaque banc physique.

2. Système selon la revendication 1, caractérisé en ce que le nombre n de bancs physiques dans un banc logique est égal à 1.

# EP 0 184 494 B1

3. Système selon la revendication 1, caractérisé en ce que le nombre N de bancs logiques de la mémoire (1) et un nombre entier premier, divisible que par lui-même.

4. Système selon l'une quelconque des revendications 1, 2 et 3, caractérisé en ce qu'il comprend un dispositif de réarrangement des données extraites $6_0 \ldots 6_p$ de la mémoire (1) connecté à chaque unité de traitement de données ($2_0 \ldots 2_p$).

5. Système selon l'une quelconque des revendications 1 à 4, caractérisé en ce que les dispositifs de réarrangements des données extraites ($6_0 \ldots 6_p$) sont interposés entre le réseau d'interconnexion (3) et les unités de traitement de données ($2_0 \ldots 2_p$) et comprennent chacun deux mémoires de réarrangement (46, 47) organisés en p bancs de q mots chacun, ainsi qu'un dispositif d'adressage et de commande (44) pour ranger les données extraites provenant de la mémoire (1) dans l'ordre logique de leur mémorisation dans la mémoire 1.

6. Système selon la revendication 1, caractérisé en ce que le nombre de bancs physiques Nxn est déterminé pour que le PGCD du nombre de bancs physiques et de la raison R, R étant défini par une suite d'adresses $A_0$, $A_1 \ldots$, $A_K$ vérifiant la relation $A_K = A_0 + KR$, soit limité à un nombre réduit de facteurs premiers.

## Patentansprüche

1. System zur gleichzeitigen Übertragung von Daten-Vektoren oder -Blöcken zwischen einem Speicher (1) und einer oder mehreren Datenverarbeitungseinheiten ($2_0 \ldots 2_p$), worin die Datenverarbeitungseinheiten asynchron in bezug aufeinander arbeiten, dadurch gekennzeichnet, daß der Speicher aus einer ganzzahligen Anzahl N von logischen Speicherbänken besteht, die jeweils eine beliebige ganze Zahl von physikalischen Bänken mit jeweils q Speicherstellen aufweisen, wobei das System ein Verbindungsnetzwerk (3) umfaßt, welches zwischen dem Speicher (1) und den Einheiten ($2_0 \ldots 2_p$) angeordnet ist, um Verbindungen zwischen den logischen Speicherbänken und den Verarbeitungseinheiten herzustellen, eine logische Steuervorrichtung (4) enthält, um die Verbindungswege in dem Verbindungsnetzwerk (3) zu steuern, sowie eine oder mehrere logische Adressiervorrichtungen ($5_0 \ldots 5_p$) aufweist, die jeweils durch eine Datenverarbeitungseinheit ($2_0 \ldots 2_p$) gesteuert werden, um die Adressierung der Stellen des Speichers (1) zu bewirken, zu welcher jede Einheit ($2_0 \ldots 2_p$) Zugriff verlangt, und die Überführung der Daten-Vektoren oder -Blöcke durchzuführen, die an der entsprechenden Stelle vorhanden sind, wobei die N.n physikalischen Blöcke des Speichers nebeneinander angeordnet und in der Reihenfolge der ganzen natürlichen Zahlen 0, ... [(N.n)-1] numeriert sind, um eine geordnete Matrixbasis von Speicherstellen zu bilden, wobei jede physikalische Bank eine Spalte der Matrix belegt und jede Speicherstelle in einer physikalischen Bank der Kreuzungspunkt einer Zeile mit einer Spalte der Matrixbasis ist und mit einer Nummer für die Stelle im Speicher versehen ist, wobei diese Nummer definiert wird, indem diese Speicherstellen entlang den Zeilen ohne Unterbrechung bis zum Ende der letzten Zeile in der Reihenfolge zunehmender ganzer natürlicher Zahlen numeriert werden, von der Stelle des Zeilenbeginns in der ersten physikalischen Bank 0 des Speichers bis zur Stelle des Zeilenendes in der letzten physikalischen Bank [(N.n)-1] des Speichers, wobei alle Zeilenbeginnstellen des Speichers im Inneren einer ersten physikalischen Bank gelegen sind, jede logische Adressiervorrichtung ($5_0 \ldots 5_p$) Mittel (22, ... 32) aufweist, um die Adresse der physikalischen Bank zu bestimmen, worin sich jede Speicherstelle befindet, und um die Adresse der Speicherstelle in der physikalischen Bank zu bestimmen, wobei weiterhin diese Adresse der physikalischen Bank durch den Rest der Division der Nummer der Stelle in dem Speicher. durch das Produkt Nxn gegeben ist, weiterhin diese Adresse der Speicherstelle in der physikalischen Bank durch den ganzzahligen Teil dieses Divisionsergebnisses gegeben ist, die logische Steuervorrichtung (4) Mittel (34) aufweist, um eine Verbindung zwischen einer anfragenden Verarbeitungseinheit mit der logischen Bank herzustellen, welche die Adresse des Beginns des Vektors oder Blocks von Daten enthält, die übertragen werden sollen, sowie Steuermittel (43) enthält, um nacheinander die anfragende Einheit mit den darauffolgenden logischen Bänken am Ende jeder Datenüberführung zwischen einer logischen Bank des Speichers (1) und der Datenverarbeitungseinheit ($2_0 \ldots 2_p$) umzuschalten, wobei ferner die Überführung der angeforderten Daten erfolgt, indem nacheinander die anfragende Einheit auf die physikalischen Bänke geschaltet wird und nach jeder Schaltung an den Speicher die Adresse der jeweiligen Speicherstelle im Inneren jeder physikalischen Bank abgegeben wird.

2. System nach Anspruch 1, dadurch gekennzeichnet, daß die Anzahl n von physikalischen Bänken in einer logischen Bank gleich 1 ist.

3. System nach Anspruch 1, dadurch gekennzeichnet, daaß die Anzahl n von logischen Bänken des Speichers (1) eine ganze Primzahl ist, die nur durch sich selbst teilbar ist.

4. System nach einem der Ansprüche 1, 2 und 3, dadurch gekennzeichnet, daß es eine Vorrichtung zur Neuanordnung der aus dem Speicher (1) entnommenen Daten $6_0 \ldots 6_p$ umfaßt, die mit jeder Datenverarbeitungseinheit ($2_0 \ldots 2_p$) verbunden ist.

5. System nach einem der Ansprüche 1 bis 4, dadurch gekennzeichnet, daß die Vorrichtungen zur Neuanordnung von entnommenen Daten ($6_0 \ldots 6_p$) zwischen dem Verbindungsnetzwerk (3) und den Datenverarbeitungseinheiten ($2_0 \ldots 2_p$) angeordnet sind und jeweils zwei Neuanordnungs-Speicher (46, 47) enthalten, die in p Bänken zu jeweils q Wörtern organisiert sind, sowie eine Adressier- und Steuervorrichtung (44), um die entnommenen, aus dem Speicher (1) herrührenden Daten in der logischen

10

# EP 0 184 494 B1

Reihenfolge ihrer Abspeicherung im Speicher 1 anzuordnen.

6. System nach Anspruch 1, dadurch gekennzeichnet, daß die Anzahl von physikalischen Bänken Nxn so bestimmt ist, daß die Größe PGCD der Anzahl von physikalischen Bänken und des Verhältnisses R, wobei R durch eine Adressenfolge $A_0, A_1 \ldots A_k$ definiert ist, welche die Beziehung $A_k = A_0 + KR$ erfüllt, auf eine kleine Anzahl von Primfaktoren begrenzt ist.

## Claims

1. A system for the simultaneous transmission of vectors or data blocks between a memory (1) and one or more processing units $(2_0 \ldots 2_p)$ in which the data processing units operate in an asynchronous manner in relation to each other, characterized in that the memory is made up of an integral number N of logical storing sets each comprising an integral number n of physical sets with q storing sites each, the system comprising an interconnection network (3) interposed between the memory (1) and the units $(2_0 \ldots 2_p)$ in order to establish connections between the logical sets of the memory and the processing units, a logical control device (4) in order to control the paths of connection within the connections network (3) as well as one or more logical addressing devices $(5_0 \ldots 5_p)$ respectively controlled by a data processing unit $(2_0 \ldots 2_p)$ in order to perform the addressing of sites of the memory (1) to which each unit $(2_0 \ldots S_p)$ requests access and in order to perform the transfer of the vectors of the data blocks contained in the corresponding sites, the N.n physical sets of the memory being juxtaposed and numbered in the order of natural integers $0, \ldots [(N.n)-1]$ in order to form an ordered matrix base of storing sites, each physical set occupying a column of the matrix, each storing site in a physical set being at the intersection of a row and of a column of the matrix base and having a site number in the memory, the number being defined by numbering these storing sets by following the rows without interruption as far as the end of the last row in the increasing order of natural integers from the initial site of the rows contained in the first physical set 0 of the memory as far as the end of rows contained in the last physical set $[(N.n)-1]$ in the memory, all the sites of the row start of the memory being situated in the interior of a first physical set, each logical addressing device $(5_0 \ldots 5_p)$ comprising means $(22, \ldots 32)$ in order to ascertain the address of the physical set in which each storing site is located and in order to ascertain the address of the storing site in the physical set, said address of the physical set being given by the division remainder of the number of the site in the memory by the product Nxn, and the said address of the storing site being set by the integral part of this division, the logical control device (4) comprising means (34) in order to establish the connection of a requesting processing unit to the logical set containing the start address of the vector or of the data block to be transferred, and control means (43) in order to successively switch the requesting unit to the logical sets at the end of each transfer of data between a logical set of the memory (1) and the data processing unit $(2_0 \ldots 2_p)$, the transfer of requested data being performed by successively switching the requesting unit to the physical sets and after each switching by dispatch to the memory of the address of the respective storing site in the interior of each physical set.

2. The system as claimed in claim 1, characterized in that the number n of physical sets of a logical set is equal to 1.

3. The system as claimed in claim 1, characterized in that the number N of logical sets of the memory (1) is a first integral number only divisible by itself.

4. The system as claimed in any one of the preceding claims 1, 2 and 3, characterized in that it comprises a device for rearranging the data $6_0 \ldots 6_p$ extracted from the memory (1) connected with each data processing unit $(2_0 \ldots 2_p)$.

5. The system as claimed in any one of the preceding claims 1 through 4, characterized in that the devices for the rearrangement of extracted data $[6_0 \ldots 6_p)$ are interposed between the interconnecting network (3) and the data processing units $(2_0 \ldots 2_p)$ and each comprise two rearrangement memories (46 and 47) organized in p sets of q words, as well as an addressing and control device (44) in order to put the extracted data originating from the memory (1) in the logical order in which they have been stored in the memory 1.

6. The system as claimed in claim 1, characterized in that the number of physical sets Nxn is so fixed that the largest common denominator of the number of physical sets and of the ratio R, R being defined by a sequence of addresses $A_0, A_1, \ldots A_k$ verifying the relationship $A_k = A_0 + KR$, is limited to a reduced number of first factors.

11

Fig.1

EP 0 184 494 B1

$B_p/M$: 0 1 2 3 4 | 5 6 7 8 9 | 10 11 12 13 14 | 15 16 17 18 19 | 20 21 22 23 24

$B_p/L$: 0 1 2 3 4 | 0 1 2 3 4 | 0 1 2 3 4 | 0 1 2 3 4 | 0 1 2 3 4

| L | BL0 | | | | | BL1 | | | | | BL2 | | | | | BL3 | | | | | BL4 | | | | | L |
|---|---|---|---|---|---|---|---|---|---|---|---|---|---|---|---|---|---|---|---|---|---|---|---|---|---|---|
| 0 | (0) | 1 | 2 | 3 | 4 | 5 | 6 | (7) | 8 | 9 | 10 | 11 | 12 | 13 | (14) | 15 | 16 | 17 | 18 | 19 | 20 | (21) | 22 | 23 | 24 | 0 |
| 1 | 25 | 26 | 27 | (28) | 29 | 30 | · | · | · | · | (35) | · | · | · | · | · | · | (42) | · | · | · | · | · | · | (49) | 1 |
| 2 | · | · | · | · | · | · | (56) | · | · | · | · | · | · | (63) | · | · | · | · | · | · | (70) | · | · | · | · | 2 |
| 3 | · | · | (77) | · | · | · | · | · | · | (84) | · | · | · | · | · | · | (91) | · | · | · | · | · | · | (98) | · | 3 |
| 4 | · | · | · | · | · | (105) | · | · | · | · | · | · | (112) | · | · | · | · | · | · | (119) | · | · | · | · | · | 4 |
| 5 | · | (126) | · | · | · | · | · | · | (133) | · | · | · | · | · | · | (140) | · | · | · | · | · | · | (147) | · | · | 5 |
| 6 | · | · | · | · | (154) | · | · | · | · | · | · | (161) | · | · | · | · | · | · | (168) | · | · | · | · | · | · | 6 |
| 7 | (175) | · | · | · | · | · | · | (182) | · | · | · | · | · | · | (189) | · | · | · | · | · | · | (196) | · | · | · | 7 |
| ·· | | | | | | | | | | | | | | | | | | | | | | | | | | ·· |
| 9-1 | 25(q-1) | · | · | · | | | | · · · | | | | | · · · | | | | | · · · | | | | | · · · | | 25 q-1 | |

BL0   BL1   BL2   BL3   BL4

| 0 | 126 | 77 | 28 | 154 | 105 | 56 | 7 | 133 | 84 | 35 | 161 | 112 | 63 | 14 | 140 | 91 | 42 | 168 | 119 | 70 | 21 | 147 | 98 | 49 | 1er TOUR |
|---|---|---|---|---|---|---|---|---|---|---|---|---|---|---|---|---|---|---|---|---|---|---|---|---|---|

Fig.2

EP 0 184 494 B1

$t_0$ — 0 1 2 3 4 5 6 R — 7
A B C D E F G Pr
↓ (DÉCALAGE CIRCULAIRE)

$t_1$ — 8
(B DEMANDE 0)

$t_2$ — ACCORDÉ 9
(D DEMANDE 3)

$t_3$ — ATTENTE 10

$t_4$ — ACCORDÉ 11

ETC ...

$t'_0$ — 0 1 2 3 4 5 6 R — 12
A B C D E F G Pr
(A ET D DEMANDE 4)

$t'_1$ — 13 ATTENTE A ET D
(ON SUPPOSE D PLUS PRIORITAIRE QUE A)

$t'_2$ — ACCORDÉ D ATTENTE A 14

$t'_3$ — ATTENTE A 15

$t'_4$ — ACCORDÉ 16

ETC ...

$t''_0$ — 0 1 2 3 4 5 6 R — 17
A B C D E F G Pr
ON SUPPOSE LE BANC 4 DÉFECTUEUX
R — RECOPIE DU BANC 4 DANS LE BANC DE RÉSERVE

$t''_1$ — 18

$t''_2$ — R — 19 (DIFFUSION)

$t''_3$ — R — 20
RECOPIE DE 4 DANS R CAR LE BANC 4 EST EN LECTURE (PAS DE DIFFUSION)

$t''_4$ — R — 21

ETC ...

Fig.3

Fig.4

Fig.5

LOGIQUE DE DÉCODAGE

PCU$_A$

REGISTRE TAMPON ~35 ~34

ACCUSÉ DEMANDE

DÉCODEUR DE DEMANDES

BASCULE

COMPTEUR MODULO LE NOMBRE DE BANC LOGIQUE

DÉCODEUR DU N° DU BANC EN LIAISON ~39

~36 ~37 ~38

Ai

A$_0$ 40$_0$
B$_0$
C$_0$ DÉCODEUR 41$_0$
D$_0$

PCU$_A$

"OU" LOGIQUE DES BANCS OCCUPÉS 42

PCU$_B$ PCU$_C$ PCU$_D$

43 "OU" LOGIQUE DES DEMANDES RETENUES

0 1 2 3 4 5 6

A$_6$ 40$_6$
B$_6$
C$_6$ DÉCODEUR 41$_6$
D$_6$

PCU$_B$
PCU$_C$
PCU$_D$

EP 0 184 494 B1

Fig.6

Fig.7

Fig.8A

Fig. 8B